# EUROPÄISCHE PATENTSCHRIFT

(11) **EP 4 477 351 B1**
(45) Veröffentlichungstag und Bekanntmachung des Hinweises auf die Patenterteilung: **22.07.2026**
(21) Anmeldenummer: 23179150.0
(22) Anmeldetag: 14.06.2023
(51) Int. Cl.: B23Q 3/154, B25B 11/00, B66C 1/06, H01F 7/20, H01F 7/02

(54) **MAGNETISCHE FIXIERVORRICHTUNG MIT SENSOREN, UND VERFAHREN**
MAGNETIC RETAINING APPARATUS WITH SENSORS, AND METHOD
APPAREIL DE FIXATION MAGNETIQUE AVEC CAPTEURS, ET PROCEDE

(43) Veröffentlichungstag der Anmeldung: 18.12.2024
(73) Patentinhaber: SAV GmbH, 90451 Nürnberg (DE)
(72) Erfinder: Leikauf, Dieter, 90451 Nürnberg (DE)
(74) Vertreter: Ruckh, Rainer Gerhard

(56) Entgegenhaltungen:
- US-A- 6 104 270
- US-A1- 2018 301 262

## Beschreibung

Die Erfindung betrifft eine Vorrichtung und ein Verfahren zur Fixierung eines Gegenstands mittels Magnetkräften.

Derartige Vorrichtungen können beispielsweise als magnetische Spannsysteme ausgebildet sein.

Magnetische Spannsysteme werden im Bereich der Werkstückbearbeitung zum Spannen von Werkstücken eingesetzt. Durch das Spannen der Werkstücke mittels des magnetischen Spannsystems sind die Werkstücke in vorgegebenen Positionen im Bereich von Bearbeitungsmaschinen fixiert, so dass eine Bearbeitungsmaschine das Werkstück mit geeigneten Werkzeugen bearbeiten kann.

Ein derartiges Spannsystem umfasst typischerweise eine Spannplatte mit einer Anordnung von Magneten. Das Werkstück wird auf die Spannplatte aufgesetzt. Die mit den Magneten generierten Magnetfelder erzeugen eine Haftkraft mit der das Werkstück auf der Spannplatte fixiert, d.h. gespannt wird.

Das Werkstück selbst beeinflusst die Magnetfelder, so dass die generierten Haftkräfte abhängig vom Werkstück selbst sind. Weiterhin kann der zwischen Werkstück und Spannplatte vorhandene Luftspalt variieren, insbesondere dann, wenn die Oberfläche des Werkstücks Unebenheiten aufweist. Auch dadurch werden die Haftkräfte beeinflusst.

Um den Spannprozess zu kontrollieren, ist es insbesondere erforderlich, Haftkräfte bei dem Spannen eines Werkstücks zu bestimmen.

Bei bekannten Spannsystemen werden hierzu Hallsensoren eingesetzt, die starre Massivkörper ausbilden und eine Dicke im Millimeterbereich aufweisen. Diese Hallsensoren müssen aufgrund ihrer großen Dicke zwischen der Spannplatte und dem Werkstück platziert werden, was den Luftspalt zwischen Spannplatte und Werkstück erhöht. Durch den vergrößerten Luftspalt kommt es zu einer inhomogenen Verteilung der mit den Magneten generierten magnetischen Flussdichten. Damit wird die Messung der magnetischen Flussdichten aus welchen die Haftkraft bestimmt wird, stark ortsabhängig. Um eine genaue Aussage über die Haftkraft zu bekommen, müssten die magnetischen Flussdichten an einer Vielzahl von Messpunkten gemessen werden und die dabei ermittelten Messwerte gemittelt werden um genauere Aussagen über die aktuelle Haftkraft zu erhalten. Dies ist jedoch in der Praxis nicht durchführbar. Die Hallsensoren sind nur an einzelnen, wenigen Messorten angeordnet und liefern somit nur ungenaue Aussagen über die Haftkurven.

Dies führt in der Praxis zu erheblichen Problemen.

Da die Haftkraft, mit der ein Werkstück an dem Spannsystem fixiert wird, abhängig vom Werkstück selbst ist und nur ungenau bestimmt werden kann, sind keine verlässlichen Aussagen darüber möglich, ob bei Durchführung von Bearbeitungsprozessen am Werkstück dieses ausreichend fixiert ist. Dies birgt die Gefahr eines unkontrollierten Ablösens des Werkstücks vom Spannsystem.

Um diesem Problem zu begegnen müssten aufwändige Prüfapparaturen installiert und betrieben werden, um durch Versuche die tatsächlich wirkenden Haftkräfte für ein bestimmtes Werkstück bei einer Vorgabe von Strömen zur Erzeugung bestimmter Magnetfeldstärken zu messen.

Dies ist in einer praktischen Anwendung auf einer Werkzeugmaschine nicht möglich.

Ähnliche Probleme ergeben sich bei Einstellungen von Haftkurven mittels Umpolsteuergeräten. Mit derartigen Umpolsteuergeräten können unterschiedliche Haftkräfte eingestellt werden. Aufgrund unterschiedlicher Werkstückbeschaffenheiten oder unterschiedlicher, ggf. inhomogener Luftspalte zwischen Werkstück und Spannplatte kann die tatsächlich wirkende Haftkraft vom eingestellten Wert verschieden sein. Da dies messtechnisch nicht oder nur unausreichend überprüfbar ist, kann die passende Haftkraft nur durch mehrfaches Ausprobieren ermittelt werden, was nicht nur zeitaufwändig ist, sondern zudem auch eine ungenaue Methode darstellt.

Schließlich sind auch Entmagnetisierungszyklen, die zur Entmagnetisierung der Magnete durchgeführt werden müssen, um dann das Werkstück von der Spannplatte abnehmen zu können, stark werkstückabhängig. Auch in diesem Fall sind aufwändige Prüfverfahren notwendig um für bestimmte Werkstücke Entmagnetisierungszyklen zu optimieren.

Die US 6 104 270 A betrifft ein Hebegerät, bei welchem Magneten vorgesehen sind, die zum Heben von Gegenständen eingesetzt werden. Den Magneten sind Sensoren zugeordnet. Mittels der Sensoren werden Flussdichten der Magnete gemessen um daraus Prozessgrößen abzuleiten.

Die US 2018 / 030 012 62 A1 betrifft ein magnetisches Spannsystem mit einer aus ferromagnetischen Elementen bestehenden magnetisierbaren Oberfläche. Mittels Sensoren wurden magnetische Flussdichten in Bereichen der magnetischen Oberfläche gemessen.

Der Erfindung liegt die Aufgabe zugrunde eine Vorrichtung und ein Verfahren bereitzustellen, mittels dessen eine zuverlässige, reproduzierbare Fixierung von Gegenständen mittels Magnetkräften ermöglicht wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Vorrichtung zur Fixierung eines Gegenstands mittels Magnetkräften, die mit einer Anordnung von Magneten welche die Magnetkräfte generieren. Der Anordnung von Magneten ist eine Anordnung von flexiblen, magnetischen Dünnschichtsensoren zugeordnet, mittels derer als Messgrößen magnetische Flussdichten der Anordnung von Magneten gemessen werden. Eine Auswerteeinheit ist vorhanden, in welcher abhängig der gemessenen magnetischen Flussdichten Prozessgrößen der Anordnung der Magnete und/oder der Fixierung des Gegenstands bestimmt werden. Die Magnete sind einer Polplatte zugeordnet, auf deren Oberseite der Gegenstand aufliegt. Die Dünnschichtsensoren liegen auf der Oberseite der Polplatte auf und sind zwischen Polplatte und Gegenstand angeordnet. Auf Magneten, die gleiche Pole ausbilden, sind Dünnschichtsensoren befestigt.

Die Erfindung betrifft auch ein entsprechendes Verfahren.

Der Grundgedanke der Erfindung besteht darin, flexible, magnetische Dünnschichtsensoren einzusetzen um damit magnetische Flussdichten zu messen, die mit der Anordnung der Magnete der erfindungsgemäßen Vorrichtung generiert werden. Abhängig von den mit den Dünnschichtsensoren generierten Messgrößen werden in einer Auswerteeinheit Prozessgrößen der Anordnung der Magnete und/oder der Fixierung des Gegenstands bestimmt.

Die erfindungsgemäß eingesetzten Dünnschichtsensoren bilden aufgrund ihrer äußerst geringen Schichtdicken flexible, d.h. biegbare Einheiten. Vorteilhaft weisen die Dünnschichtsensoren Schichtdicken im einstelligen Mikometerbereich auf.

Besonders vorteilhaft liegen die Sensorschichtdicken im Bereich von 100 nm bis 200 nm, was je nach Anforderung an die Robustheit des Gesamt-Sensors eine Gesamt-Sensordicke von 2 µm bis 50 µm ermöglicht.

Die Sensorstrukturen der Dünnschichtsensoren sind hierzu auf flexiblen Substraten aufgebracht, wie z.B. Polymerfolien oder andere Folien.

Aufgrund der geringen Schichtdicken können die Dünnschichtsensoren insbesondere im Inneren der Vorrichtung, insbesondere direkt an der Anordnung der Magnete angebracht werden, oder dass hierfür ein zusätzlicher Bauraum vorgesehen werden muss, und ohne dass die Funktionalität der Vorrichtung beeinträchtigt wird. Weiterhin können die Dünnschichtsensoren auch zwischen der Vorrichtung und dem zu fixierenden Gegenstand angeordnet sein, ohne dass hierzu der Abstand, d.h. der Luftspalt zwischen Vorrichtung und Gegenstand nennenswert vergrößert wird. Dies hat den Vorteil, dass die Dünnschichtsensoren die mit den Magneten generierten Magnetfelder nicht nennenswert beeinflussen und damit auch die Fixierung des Gegenstands an der Vorrichtung nicht beeinträchtigen.

Die magnetischen Dünnschichtsensoren sind vorteilhaft als Hallsensoren ausgebildet.

Besonders vorteilhaft bilden die Dünnschichtsensoren ein oder mehrere Sensorarrays aus, mittels derer eine ortsaufgelöste Erfassung von magnetischer Flussdichten erfolgt.

Die Sensorarrays bilden generell flächige Strukturen aus, die einerseits linienförmig oder andererseits matrixförmig ausgebildet sein können.

Besonders vorteilhaft sind die Geometrien der Sensorarrays an die Geometrien der Magnete angepasst, so dass vorteilhaft über die gesamte Anordnung der Magneten eine ortsaufgelöste Erfassung von magnetischen Flussdichten ermöglicht wird. Dies ermöglicht eine genaue, reproduzierbare Ermittlung von Prozessgrößen abhängig von den gemessenen magnetischen Flussdichten.

Die Funktionsweise der erfindungsgemäßen Vorrichtung ist generell derart, dass mit diesen Magneten Magnetfelder generiert werden, die den zu fixierenden Gegenstand magnetisieren. Dadurch wird der Gegenstand durch wirkende Magnetkräfte an der Vorrichtung fixiert.

Gemäß einer ersten Ausgestaltung bildet die erfindungsgemäße Vorrichtung ein Lasthebesystem. Die Anordnung von Magneten bildet in diesem Fall einen Lasthebemagnet mit dem ein eine Last bildender Gegenstand fixiert wird, so dass die Last angehoben und transportiert werden kann.

Gemäß einer zweiten Ausgestaltung bildet die erfindungsgemäße Vorrichtung ein magnetisches Spannsystem aus, auf dem Werkstücke gespannt, d.h. fixiert werden können. Das Spannsystem weist hierzu eine Spannplatte auf, auf der das Werkstück angespannt wird.

Gemäß einer konstruktiv vorteilhaften Ausgestaltung umfasst das Spannsystem eine Mehrfachanordnung von Magneten, die in einem Gehäuse gelagert werden. Das Gehäuse ist an seiner Oberseite offen und wird mit einer Polplatte abgeschlossen, auf der das Werkstück aufgelegt wird.

Die Magnete können dabei von Permanentmagneten, Elektromagneten oder Elektro-Permanentmagneten gebildet sein. Durch eine Bestromung der Magnete genieren diese Magnetfelder, mittels derer das Werkstück magnetisiert und dadurch auf der Polplatte gespannt wird.

Da die magnetischen Dünnschichtsensoren geringe Schichtdicken, vorteilhaft im einstelligen Mikrometerbereich aufweisen, können diese ohne Umbauten vornehmen zu müssen, direkt auf Magneten befestigt werden und so im Gehäuse untergebracht werden. Vorteilhaft werden dabei Dünnschichtsensoren nur auf Magnete aufgebracht, die gleiche Pole bilden, also nur Nordpole oder nur Südpole. Bei dieser Ausführungsform bleibt der Luftspalt zwischen Polplatten und Werkstücken völlig unbeeinträchtigt, so dass die Magnetfelder im Luftspalt und damit auch im Werkstück von den Dünnschichtsensoren völlig unbeeinflusst sind.

Alternativ können die Dünnschichtsensoren auf die Oberseite der Polplatten aufgelegt oder dort befestigt werden und sind damit zwischen Polplatten und Werkstücken angeordnet. Da die Dünnschichtsensoren sehr geringe Schichtdicken aufweisen, bleiben durch diese die Magnetfelder nahezu unbeeinflusst und damit auch generierte Haftkräfte, die das Werkstück an der Polplatte halten.

Besonders vorteilhaft werden mit den Dünnschichtsensoren die durch die Magnete generierten Haftkräfte, die das Werkstück am Spannsystem fixieren, bestimmt. Die Haftkraft ergibt sich in bekannter Weise aus den gemessenen magnetischen Flussdichten über die Maxwellsche Zugkraftformel.

Da mit den Dünnschichtsensoren eine ortsaufgelöste Erfassung von magnetischen Flussdichten erfolgt, kann für jedes mit dem Spannsystem gespannte Werkstück die Haftkraft exakt bestimmt werden. Besonders vorteilhaft ist, dass die Dünnschichtsensoren aufgrund ihrer geringen Schichtdicken die Magnetfelder, die die Fixierung des Werkstücks bewirken, nicht beeinträchtigen. Insbesondere wird der Luftspalt zwischen dem Werkstück und der Polplatte nicht oder nicht nennenswert vergrößert, so dass durch die Dünnschichtsensoren die Haftkraft nicht oder nicht nennenswert reduziert wird.

Da mit den Dünnschichtsensoren die wirkende Haftkraft selbst bei vorhandenen Unebenheiten der Werkstücks-Oberfläche genau bestimmt und kontrolliert werden kann, entfallen aufwändige Prüfungen mittels Prüfverfahren hierfür, mit denen bestimmt wird, bei welcher Kraft sich das Werkstück vom Spannsystem ablöst. Damit wird auch die Auslegung der Spannsysteme dahingehend verbessert, dass keine großen Sicherheitsfaktoren bei der Dimensionierung der Haftkraft vorgesehen werden müssen, da durch die Kontrolle der Haftkraft mittels der Dünnschichtsensoren die wirkende Haftkraft genau und zeitaufgelöst bestimmt werden kann.

Schließlich ist es auch möglich eine Haftkraftregelung durchzuführen. Die mittels der Dünnschichtsensoren aktuell gemessenen magnetischen Flussdichten liefern die aktuelle Haftkraft als Istwert, die mit einem in der Auswerteeinheit gespeicherten Sollwert verglichen wird, wodurch ein Regelungsprozess möglich ist.

Gemäß einer vorteilhaften Ausführungsform ist bei dem erfindungsgemäßen Spannsystem ein Umpolsteuergerät vorhanden, mittels dessen Haftkräfte vorgebbar sind. Anhand von Messgrößen der Dünnschichtsensoren werden die vorgegebenen Haftkräfte auf Sollwerte eingestellt.

Eine am Umpolsteuergerät eingestellte Haftkraft wird in der Auswerteeinheit als Sollwert übernommen. Durch die Messung der tatsächlichen Haftkraft mittels der Dünnschichtsensoren kann diese dann auf den Sollwert eingeregelt werden.

Damit ist gewährleistet, dass aus Umpolsteuergeräten eingestellte Haftkräfte auch tatsächlich realisiert werden. Dies stellt eine erhebliche Verbesserung der Funktionalität von Umpolsteuergeräten dar, in dem eine genaue und reproduzierbare Vorgabe von Haftkurven ermöglicht wird.

Gemäß einer weiteren vorteilhaften Ausgestaltung werden abhängig von Messgrößen der Dünnschichtsensoren Entmagnetisiervorgänge der Magnete erfasst und/oder kontrolliert und/oder optimiert.

Um nach einer erfolgten Fixierung eines Gegenstands an der Vorrichtung diesen Gegenstand wieder lösen zu können, müssen die Magnetfelder wieder abgebaut werden, was durch Entmagnetisierungszyklen der Magnete erfolgt. Dies erfolgt durch Bestimmungen der Flussdichten der Magnete. Erfindungsgemäß werden dabei mit den Dünnschichtsensoren zeitaufgelöst die Amplituden der magnetischen Flussdichten erfasst. Abhängig hiervon können die Entmagnetisierungszyklen optimiert werden, wobei hier die Ströme, mit denen die Magnete beaufschlagt werden die Stellgrößen bilden.

Gemäß einer vorteilhaften Ausgestaltung werden abhängig von Messgrößen der Dünnschichtsensoren In-Prozess-Kontrollen durchgeführt.

Bei derartigen In-Prozess-Kontrollen können insbesondere fortlaufend Prozessparameter der Vorrichtung selbst kontrolliert und optimiert werden. Beispielsweise hierfür sind die Auslegungen von Sicherheitsfaktoren betreffend die Haftkräfte. Auch kann die Stabilität von Spannprozessen kontrolliert werden, wobei beispielsweise die Einflüsse von Unebenheiten von Werkstücks-Oberflächen auf die Spannprozesse erfasst werden.

Weiterhin kann die Vorrichtung, insbesondere in der Ausbildung als Spannsystem, in Bearbeitungseinheiten wie z.B. Werkzeugmaschinen integriert sein. Dann können sich Prozessparameter des Gesamtsystems, wie z.B. Zerspannungsparameter bei zerspannenden Bearbeitungsvorgängen kontrolliert und optimiert werden. Damit kann die erfindungsgemäße Vorrichtung in Industrie 4.0 - Anwendungen eingesetzt werden, insbesondere im Hinblick auf Produktaktivitätssteigerungen.

Die Erfindung wird im Folgenden anhand der Zeichnungen erläutert. Es zeigen:
- Figur 1:: Erstes Ausführungsbeispiel der erfindungsgemäßen Vorrichtung in Form eines Spannsystems.
- Figur 2:: Zweites Ausführungsbeispiel der erfindungsgemäßen Vorrichtung in Form eines Spannsystems.
- Figur 3:: Komponenten des Spannsystems gemäß den Figuren 1 und 2.
- Figur 4:: Drittes Ausführungsbeispiel der erfindungsgemäßen Vorrichtung in Form eines Lasthebesystems.

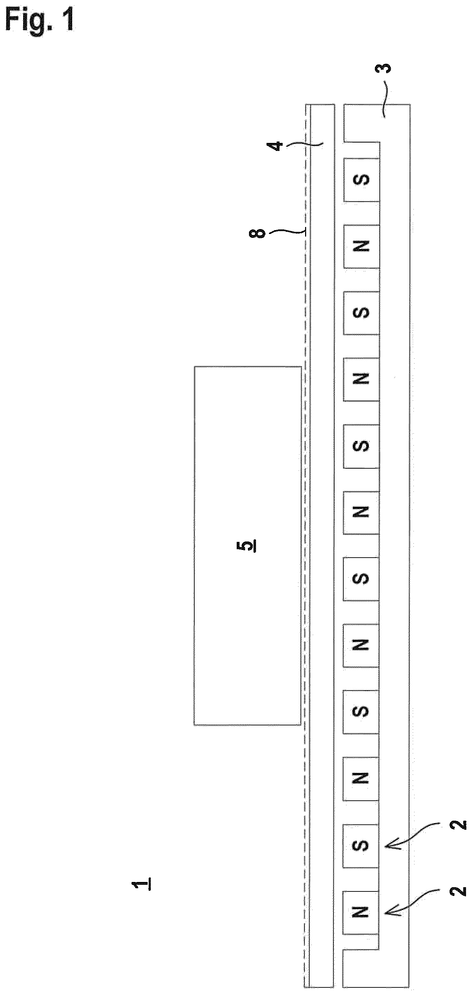

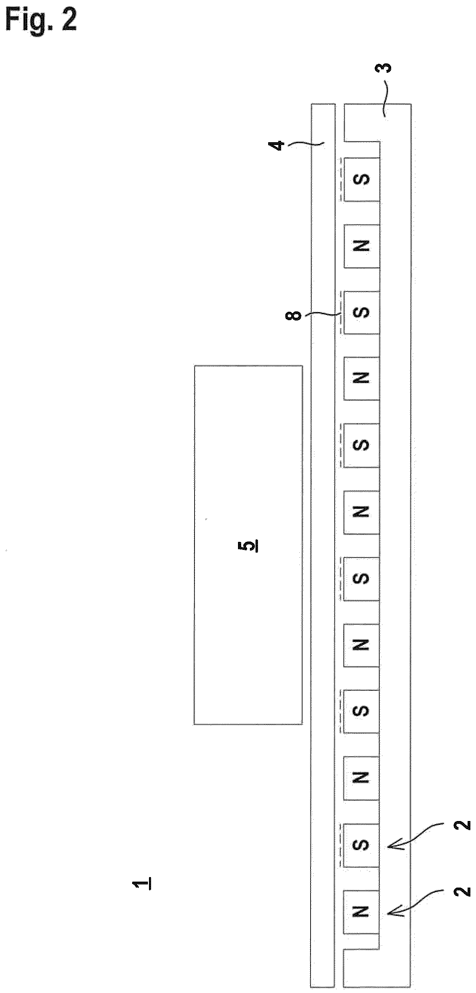

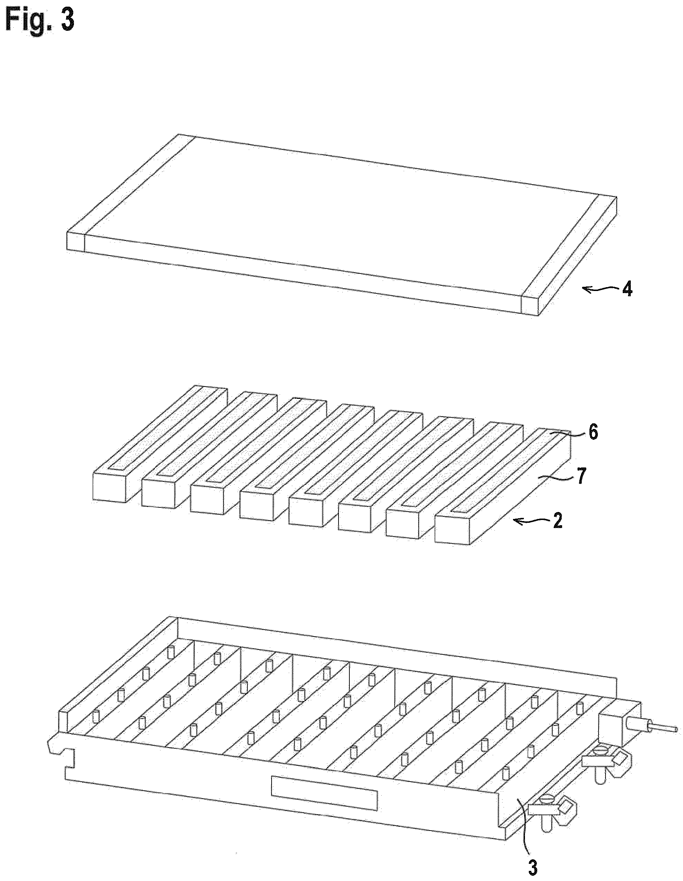

Die Figuren 1 und 2 zeigen Ausführungsbeispiele der erfindungsgemäßen Vorrichtung in Form eines Spannsystems 1. Figur 3 zeigt Komponenten des Spannsystems 1 in einer Einzeldarstellung.

Das Spannsystem 1 umfasst eine Anordnung von Magneten 2, die in einem Gehäuse 3 gelagert werden. Die stabförmigen Magnete 2 erstecken sich über die gesamte Breite des Gehäuses 3 und bilden so eine Reihenanordnung, wobei die Magnete 2 mit Nordpolen N und Südpolen S alternierend im Gehäuse 3 angeordnet sind, wie die Figuren 1 und 2 zeigen. Die offene Oberseite des Gehäuses 3 ist mit einer Polplatte 4 abgeschlossen. Die Oberseite der Polplatte 4 bildet eine Auflagefläche, auf der ein zu spannendes Werkstück 5 gelagert ist.

Im vorliegenden Fall weisen die identisch ausgebildeten Magnete 2 jeweils einen Kern 6 aus magnetisierbarem Material auf, der von Spulen 7 umgeben ist (Figur 3). Die Magnete 2 bilden somit Elektromagnete. Besteht der Kern 6 aus Permanentmagnetmaterial bilden die Magnete 2 Elektro-Permanentmagnete. Prinzipiell können als Magnete 2 auch reine Permanentmagnete vorgesehen sein.

Durch Bestromung der Spulen 7 der Magnetfelder werden Magnetfelder erzeugt, mit denen das Werkstück 5 magnetisiert wird. Mit den so genannten Magnetkräften, d.h. Haftkräften wird das Werkstück 5 gespannt.

Erfindungsgemäß ist bei dem Spannsystem 1 eine Anordnung von flexiblen, magnetischen Dünnschichtsensoren 8 vorhanden, mittels derer magnetische Flussdichten der Magnete 2 gemessen werden. Die Dünnschichtsensoren 8 sind als Hallsensoren ausgebildet. Die Schichtdicken der Dünnschichtsensoren 8 liegen im Bereich von 100 nm bis 200 nm, was je nach Anforderung an die Robustheit des Gesamt-Sensors eine Gesamt-Sensordicke von 2 µm bis 50 µm ermöglicht.

Die Dünnschichtsensoren 8 können eine flächige Matrixanordnung bilden und auf der Oberseite der Polplatte 4 angeordnet sein (Figur 1). Die Dünnschichtsensoren 8 können sich über die gesamte Oberfläche der Polplatte 4 erstrecken, wobei die Dünnschichtsensoren 8 auf die Polplatte 4 aufgelegt oder auf dieser fixiert sein können, beispielsweise durch Klebeverbindungen. Aufgrund der geringen Schichtdicke der Dünnschichtsensor 8 bleibt der Luftspalt zwischen Werkstück 5 und Polplatte 4 nahezu unverändert, so dass auch die magnetischen Felder und damit die Haftkraft, mit der das Werkstück 5 am Spannsystem 1 fixiert ist, nahezu unbeeinträchtigt bleiben.

Bei der Ausführungsform gemäß Figur 2 sind die Dünnschichtsensoren 8 auf den Oberseiten der jeweils einen Südpol ausbildenden Magnete 2 befestigt, insbesondere durch Klebeverbindungen. Natürlich können die Dünnschichtsensoren 8 auch auf den Nordpole ausbildenden Magneten 2 befestigt sein. Die Dünnschichtsensoren 8 erstrecken sich vorteilhaft über die gesamten Oberseiten der Magnete 2. Aufgrund der geringen Schichtdicken beanspruchen die Dünnschichtsensoren 8 nahezu keinen Bauraum und können somit einfach im Gehäuse 3 des Spannsystems 1 integriert werden.

Mit den Dünnschichtsensoren 8 werden bei beiden Ausführungsformen zeitaufgelöst und ortsaufgelöst die magnetische Flussdichten der Magnete 2 erfasst. Diese Messgrößen werden in einer nicht dargestellten Auswerteeinheit ausgewertet. Die Auswerteeinheit kann von einem Prozessorsystem gebildet sein, das im Gehäuse 3 des Spannsystems 1 angeordnet sein kann oder eine separate Einheit bilden kann.

Aufgrund der Messgrößen der Dünnschichtsensoren 8 wird in der Auswerteeinheit nach der Maxwellschen Zugkraftformel die Haftkraft, mit der das Werkstück 5 am Spannsystem 1 fixiert wird, berechnet. Da mit den Dünnschichtsensoren 8 eine ortsaufgelöste Erfassung der magnetischen Flussdichten durchgeführt wird, werden auch Störeinflüsse wie Werkstück-Unebenheiten, bei der Haftkraftbestimmung erfasst, so dass die Haftkraft für beliebige Werkstücke 5 hochgenau bestimmt werden kann.

In der Auswerteeinheit kann die Haftkraft während des Spannprozesses kontrolliert und optimiert werden. Auch ist eine Haftkraftregelung möglich. Die mittels der Messgrößen bestimmte aktuelle Haftkraft bildet dann einen Istwert, der auf einen in der Auswerteeinheit vorgegebenen Sollwert eingeregelt werden kann, in dem die Ströme für die Magneten 2 entsprechend eingestellt werden.

Insbesondere kann auch eine Haftkurvenregelung durchgeführt werden. In diesem Fall ist ein Umpolsteuergerät vorhanden, mittels dessen Haftkräfte vorgebbar sind. Anhand von Messgrößen der Dünnschichtsensoren 8 werden die vorgegebenen Haftkräfte auf Sollwerte eingestellt.

Weiterhin können abhängig von Messgrößen der Dünnschichtsensoren 8 Entmagnetisiervorgänge der Magnete 2 erfasst und/oder kontrolliert und/oder optimiert werden.

Typischerweise ist das Spannsystem 1 in einer Bearbeitungsmaschine integriert, die Bearbeitungsvorgänge am Werkstück 5 durchführen, die mit dem Spannsystem 1 gespannt werden. In diesem Fall kann anhand der Messgrößen der Dünnschichtsensoren 8 eine In-Prozess-Kontrollen durchgeführt werden, in der Bearbeitungsvorgänge automatisch kontrolliert werden.

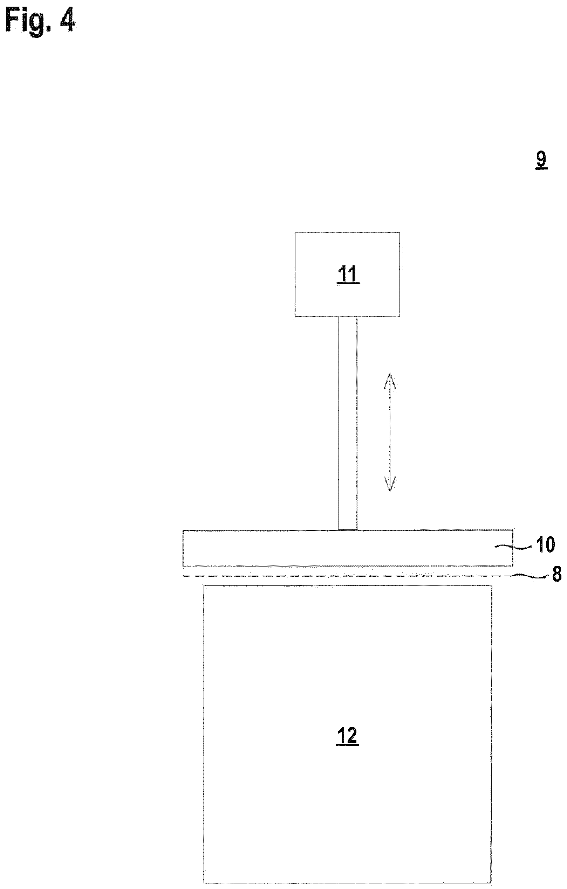

Figur 4 zeigt ein Ausführungsbeispiel der erfindungsgemäßen Vorrichtung in Form eines Lasthebesystems 9. Das Lasthebesystem 9 weist einen Lasthebemagnet 10 auf, der an eine motorisch getriebene Hebevorrichtung 11 gekoppelt ist. Mit dem Lasthebemagnet 10 wird, entsprechend der Ausführungsformen der Figuren 1 und 2, ein eine Last 12 bildender Gegenstand durch Magnetkräfte fixiert, so dass die Last 12 angehoben und transportiert werden kann.

Auf der Last 12 zugewandten Oberfläche ist eine flächige Anordnung von Dünnschichtsensoren 8 befestigt. Die Ausbildung und Funktionsweise hierzu Dünnschichtsensoren 8 entspricht den Ausführungsformen gemäß den Figuren 1 und 2.

### Bezugszeichenliste

- (1): Spannsystem
- (2): Magnet
- (3): Gehäuse
- (4): Polplatte
- (5): Werkstück
- (6): Kern
- (7): Spule
- (8): Dünnschichtsensor
- (9): Lasthebesystem
- (10): Lasthebemagnet
- (11): Hebevorrichtung
- (12): Last

## Patentansprüche

1. Vorrichtung zur Fixierung eines Gegenstands mittels Magnetkräften, mit einer Anordnung von Magneten (2), welche die Magnetkräfte generieren, **dadurch gekennzeichnet, dass** der Anordnung von Magneten (2) eine Anordnung von flexiblen, magnetischen Dünnschichtsensoren (8) zugeordnet ist, mittels derer als Messgrößen magnetische Flussdichten der Anordnung von Magneten (2) gemessen werden, und dass eine Auswerteeinheit vorhanden ist, in welcher abhängig der gemessenen magnetischen Flussdichten Prozessgrößen der Anordnung der Magnete (2) und/oder der Fixierung des Gegenstands bestimmt werden, dass die Magnete (2) einer Polplatte (4) zugeordnet sind, auf deren Oberseite in Betrieb der Gegenstand aufliegt, und dass die Dünnschichtsensoren (8) auf der Oberseite der Polplatte (4) aufliegen und zwischen Polplatte (4) und Gegenstand angeordnet sind, oder dass auf Magneten (2), die gleiche Pole ausbilden, Dünnschichtsensoren (8) befestigt sind.

2. Vorrichtung nach Anspruch 1, **dadurch gekennzeichnet, dass** diese ein Lasthebesystem (9) oder ein Spannsystem (1) ausbildet.

3. Vorrichtung nach einem der Ansprüche 1 bis 2, **dadurch gekennzeichnet, dass** die Dünnschichtsensoren (8) Hallsensoren sind.

4. Vorrichtung nach einem der Ansprüche 1 bis 3, **dadurch gekennzeichnet, dass** Sensorschichtdicken von Dünnschichtsensoren (8) im Bereich von 100 nm bis 200 nm liegen.

5. Vorrichtung nach Anspruch 4, **dadurch gekennzeichnet, dass** Gesamt-Sensordicken von Dünnschichtsensoren (8) im Bereich von 2 µm bis 50 µm liegen.

6. Vorrichtung nach einem der Ansprüche 1 bis 5, **dadurch gekennzeichnet, dass** die Dünnschichtsensoren (8) ein oder mehrere Sensorarrays ausbilden, mittels derer eine ortsaufgelöste Erfassung von magnetischen Flussdichten erfolgt.

7. Verfahren zur Fixierung eines Gegenstands mittels Magnetkräften, die mit einer Anordnung von Magneten (2) generiert werden, **dadurch gekennzeichnet, dass** der Anordnung von Magneten (2) eine Anordnung von flexiblen, magnetischen Dünnschichtsensoren (8) zugeordnet ist, mittels derer als Messgrößen magnetische Flussdichten der Anordnung von Magneten (2) gemessen werden, und dass eine Auswerteeinheit vorhanden ist, in welcher abhängig der gemessenen magnetischen Flussdichten Prozessgrößen der Anordnung der Magnete (2) und/oder der Fixierung des Gegenstands bestimmt werden, dass die Magnete (2) einer Polplatte (4) zugeordnet sind, auf deren Oberseite der Gegenstand aufliegt, und dass die Dünnschichtsensoren (8) auf der Oberseite der Polplatte (4) aufliegen und zwischen Polplatte (4) und Gegenstand angeordnet sind, oder dass auf Magneten (2), die gleiche Pole ausbilden, Dünnschichtsensoren (8) befestigt sind.

8. Verfahren nach Anspruch 7, **dadurch gekennzeichnet, dass** in der Auswerteeinheit Haftkräfte bestimmt werden, mit der der Gegenstand fixiert ist.

9. Verfahren nach Anspruch 8, **dadurch gekennzeichnet, dass** abhängig von Messgrößen der Dünnschichtsensoren (8) Haftkräfte kontrolliert und/oder geregelt und/oder optimiert werden.

10. Verfahren nach Anspruch 9, **dadurch gekennzeichnet, dass** ein Umpolsteuergerät vorhanden ist, mittels dessen Haftkräfte vorgebbar sind, und dass anhand von Messgrößen der Dünnschichtsensoren (8) die vorgegebenen Haftkräfte auf Sollwerte eingestellt werden.

11. Verfahren nach einem der Ansprüche 7 bis 10, **dadurch gekennzeichnet, dass** abhängig von Messgrößen der Dünnschichtsensoren (8) Entmagnetisiervorgänge der Magnete (2) erfasst und/oder kontrolliert und/oder optimiert werden.

12. Verfahren nach einem der Ansprüche 7 bis 11, **dadurch gekennzeichnet, dass** abhängig von Messgrößen der Dünnschichtsensoren (8) In-Prozess-Kontrollen durchgeführt werden.

## Claims

1. Device for retaining an object by means of magnetic forces, comprising an arrangement of magnets (2) which generate the magnetic forces, **characterised in that** the arrangement of magnets (2) is associated with an arrangement of flexible, magnetic thin-film sensors (8), by means of which magnetic flux densities of the arrangement of magnets (2) are measured as measured variables, and that an evaluation unit is provided, in which process variables of the arrangement of magnets (2) and/or the retaining of the object are determined depending on the measured magnetic flux densities, that the magnets (2) are associated with a pole plate (4), on the upper surface of which the object rests during operation, and that the thin-film sensors (8) rest on the upper surface of the pole plate (4) and are arranged between the pole plate (4) and the object, or that thin-film sensors (8) are attached to magnets (2) which form the same poles.

2. Apparatus according to claim 1, **characterised in that** it forms a load-lifting system (9) or a clamping system (1).

3. A device according to one of claims 1 to 2, **characterised in that** the thin-film sensors (8) are Hall sensors.

4. A device according to any one of claims 1 to 3, **characterised in that** the sensor layer thicknesses of the thin-film sensors (8) are in the range from 100 nm to 200 nm.

5. Device according to claim 4, **characterised in that** the total sensor thicknesses of the thin-film sensors (8) are in the range from 2 µm to 50 µm.

6. Device according to any one of claims 1 to 5, **characterised in that** the thin-film sensors (8) form one or more sensor arrays, by means of which spatially resolved detection of magnetic flux densities takes place.

7. A method for retaining an object by means of magnetic forces generated by a arrangement of magnets (2), **characterised in that** the arrangement of magnets (2) is associated with an arrangement of flexible, magnetic thin-film sensors (8), by means of which magnetic flux densities of the arrangement of magnets (2) are measured as measured variables, and that an evaluation unit is provided, in which process variables of the arrangement of magnets (2) and/or the fixation of the object are determined depending on the measured magnetic flux densities, that the magnets (2) are associated with a pole plate (4), on the upper surface of which the object rests, and that the thin-film sensors (8) rest on the upper surface of the pole plate (4) and are arranged between the pole plate (4) and the object, or that thin-film sensors (8) are attached to magnets (2) which form the same poles.

8. A method according to claim 7, **characterised in that** the evaluation unit determines the adhesive forces with which the object is fixed.

9. A method according to claim 8, **characterised in that** adhesive forces are monitored and/or controlled and/or optimised depending on measured variables from the thin-film sensors (8).

10. A method according to claim 9, **characterised in that** a polarity reversal control device is provided, by means of which adhesive forces can be preset, and **in that** the preset adhesive forces are adjusted to setpoints on the basis of measured values from the thin-film sensors (8).

11. A method according to any one of claims 7 to 10, **characterised in that**, depending on measured variables from the thin-film sensors (8), demagnetisation processes of the magnets (2) are detected and/or controlled and/or optimised.

12. A method according to any one of claims 7 to 11, **characterised in that** in-process checks are carried out depending on measured values from the thin-film sensors (8).

## Revendications

1. Dispositif pour la fixation d'un objet au moyen de forces magnétiques, comprenant un agencement d'aimants (2) qui génèrent les forces magnétiques, **caractérisé en ce qu'**un agencement de capteurs magnétiques flexibles à couche mince (8) est associé à l'agencement d'aimants (2), au moyen desquels les densités de flux magnétique de l'agencement d'aimants (2) sont mesurées en tant que grandeurs de mesure, et qu'il est prévu une unité d'évaluation dans laquelle, en fonction des densités de flux magnétique mesurées, on détermine des paramètres de processus de l'ensemble d'aimants (2) et/ou de la fixation de l'objet, que les aimants (2) sont associés à une plaque polaire (4) sur la face supérieure de laquelle repose l'objet en fonctionnement, et que les capteurs à couche mince (8) reposent sur la face supérieure de la plaque polaire (4) et sont disposés entre la plaque polaire (4) et l'objet, ou que des capteurs à couche mince (8) sont fixés sur des aimants (2) formant des pôles identiques.

2. Dispositif selon la revendication 1, **caractérisé en ce qu'**il forme un système de levage de charge (9) ou un système de serrage (1).

3. Dispositif selon l'une des revendications 1 à 2, **caractérisé en ce que** les capteurs à couche mince (8) sont des capteurs à effet Hall.

4. Dispositif selon l'une des revendications 1 à 3, **caractérisé en ce que** les épaisseurs de couche des capteurs à couche mince (8) se situent dans la plage de 100 nm à 200 nm.

5. Dispositif selon la revendication 4, **caractérisé en ce que** les épaisseurs totales des capteurs à couche mince (8) se situent dans la plage de 2 µm à 50 µm.

6. Dispositif selon l'une des revendications 1 à 5, **caractérisé en ce que** les capteurs à couche mince (8) forment un ou plusieurs réseaux de capteurs au moyen desquels s'effectue une détection à résolution spatiale des densités de flux magnétique.

7. Procédé de fixation d'un objet au moyen de forces magnétiques générées par un agencement d'aimants (2) , **caractérisé en ce qu'**un agencement de capteurs magnétiques à couche mince (8) flexibles est associé à l'agencement d'aimants (2), au moyen duquel les densités de flux magnétique de l'agencement d'aimants (2) sont mesurées en tant que grandeurs de mesure, et qu'il existe une unité d'évaluation dans laquelle, en fonction des densités de flux magnétique mesurées, on détermine des paramètres de processus de l'agencement d'aimants (2) et/ou de la fixation de l'objet, que les aimants (2) sont associés à une plaque polaire (4) sur la face supérieure de laquelle repose l'objet, et que les capteurs à couche mince (8) reposent sur la face supérieure de la plaque polaire (4) et sont disposés entre la plaque polaire (4) et l'objet, ou que des capteurs à couche mince (8) sont fixés sur des aimants (2) formant des pôles identiques.

8. Procédé selon la revendication 7, **caractérisé en ce que** les forces d'adhérence avec lesquelles l'objet est fixé sont déterminées dans l'unité d'évaluation.

9. Procédé selon la revendication 8, **caractérisé en ce que** les forces d'adhérence sont contrôlées et/ou régulées et/ou optimisées en fonction des grandeurs de mesure des capteurs à couche mince (8).

10. Procédé selon la revendication 9, **caractérisé en ce qu'**il est prévu un dispositif de commande de polarité au moyen duquel des forces d'adhérence peuvent être prédéfinies, et **en ce que** les forces d'adhérence prédéfinies sont réglées sur des valeurs de consigne à l'aide des grandeurs de mesure des capteurs à couche mince (8).

11. Procédé selon l'une des revendications 7 à 10, **caractérisé en ce que**, en fonction des grandeurs mesurées par les capteurs à couche mince (8), les processus de démagnétisation des aimants (2) sont détectés et/ou contrôlés et/ou optimisés.

12. Procédé selon l'une des revendications 7 à 11, **caractérisé en ce que** des contrôles en cours de processus sont effectués en fonction des grandeurs de mesure des capteurs à couche mince (8).
